# EUROPEAN PATENT SPECIFICATION

(11) **EP 3 382 059 B1**
(45) Date of publication and mention of the grant of the patent: **06.05.2020**
(21) Application number: 16868512.1
(22) Date of filing: 21.11.2016
(51) Int. Cl.: C23C 24/04, B32B 3/30, B32B 15/01

(54) **METHOD FOR PRODUCING LAMINATE**
VERFAHREN ZUR HERSTELLUNG VON LAMINAT
PROCÉDÉ DE PRODUCTION D'UN STRATIFIÉ

(30) Priority: 26.11.2015 JP 2015231123
(43) Date of publication of application: 03.10.2018
(73) Proprietor: NHK Spring Co., Ltd., Yokohama-shi, Kanagawa 236-0004 (JP)
(72) Inventor: ARAKI, Yoshihito, Yokohama-shi Kanagawa 236-0004 (JP); YAMAUCHI, Yuichiro, Yokohama-shi Kanagawa 236-0004 (JP)
(74) Representative: Hoffmann Eitle
(86) International application number: PCT/JP2016/084504
(87) International publication number: WO 2017/090565

(56) References cited:
- JP-A- 2008 018 455
- JP-A- 2008 018 455
- JP-A- 2009 215 574
- JP-A- 2010 144 224
- JP-A- 2012 025 983
- JP-A- 2012 219 304
- JP-A- 2013 067 825
- JP-A- 2014 156 634
- JP-A- 2015 068 396

## Description

### Field

The present invention relates to a method for manufacturing a laminate.

### Background

In recent years, as a kind of thermal spraying method, a cold spraying method for spraying a material powder onto a substrate at a high temperature and a high speed and thereby depositing and coating the material powder on the substrate has attracted attention. In the cold spraying method, a material powder is injected from a tapering divergent (de Laval) nozzle together with an inert gas heated to a temperature of the melting point or the softening point of the material powder or lower to cause the material powder to be a film to collide with a substrate in a solid phase state, and a film is thereby formed on a surface of the substrate. Therefore, it is possible to obtain a metal film without phase transformation and with suppressed oxidation.

When a metal film is formed on a metal substrate by the cold spraying method, and when a material powder of the metal film collides with the substrate, plastic deformation occurs between the powder and the substrate, and an anchor effect that the powder and the substrate enter each other to be bonded to each other is obtained. In addition, oxide films thereof are broken, and metal bonding occurs by newly formed surfaces. As a result, a film having high adhesion strength can be formed. However, when a metal material having a high hardness is used as a substrate, probably because of an insufficient anchor effect due to plastic deformation, a metal film cannot be formed, or even if the metal film is formed, only a laminate having low interfacial strength between the substrate and the metal film is obtained.

Meanwhile, a technique of activating a surface of a substrate by injecting powder onto a substrate at a lower powder speed than a film forming condition, for example, at a lower gas pressure in a step prior to film formation by the cold spraying method has been proposed (for example, refer to Patent Literature 1). In addition, a technique of forming a film by injecting powder material obtained by mixing a film raw material powder having a particle diameter of 5 to 50 µm and a peening powder having a particle diameter of 100 to 1000 µm from one nozzle or injecting the film raw material powder and the peening powder from separate nozzles has been proposed (for example, refer to Patent Literature 2). Furthermore, the production of a laminate by a cold spraying method has been described, which includes a pre-treatment step of a substrate and a subsequent film forming step conducted at low working gas pressures (for example, refer to Patent Literature 3).

### Citation List

### Patent Literature

Patent Literature 1: JP 2009-215574 A
Patent Literature 2: JP 2006-52449 A
Patent Literature 3: JP 2012-25983 A

### Summary

### Technical Problem

In Patent Literature 1, by using powder material formed of the same material as powder material to form a film and lowering a powder speed than a film forming condition by the cold spraying method, a surface of a substrate is activated. Therefore, a substrate having a high hardness cannot sufficiently obtain an anchor effect due to roughening a surface of the substrate.

Meanwhile, Patent Literature 2 aims at obtaining a dense film by simultaneously injecting a film raw material powder and a peening powder onto a surface of a substrate, and neither describes nor suggests roughening the surface of the substrate by the peening powder or adhesion of the film to the substrate by roughening. In addition, the peening powder remains in the film, and therefore it is difficult to form a film only with the film raw material.

The present invention has been achieved in view of the above, and an object of the present invention is to provide a method for manufacturing a laminate by forming a film having high adhesion on a substrate having a high hardness.

### Solution to Problem

To solve the above-described problem and achieve the object, a method for manufacturing a laminate according to the present invention including a substrate made of a metal or an alloy having a Vickers hardness of 120 HV or more, and a film formed on a surface of the substrate and made of a metal or an alloy includes: a blasting step of blasting the surface of the substrate by accelerating powder of non-metal together with a gas heated to a temperature lower than a melting point of the non-metal and spraying the powder of non-metal onto the surface of the substrate in a solid phase state; and a film forming step of forming the film by accelerating a metal or alloy powder together with a gas heated to a temperature lower than the melting point of the metal or the alloy, spraying the powder in a solid phase state onto the surface of the substrate blasted in the blasting step, and depositing the powder onto the surface of the substrate, wherein the non-metal is ceramics, diamond, or glass, an average particle diameter (D50) of the powder of the non-metal is 15 to 500 µm, an average particle diameter of the metal or alloy powder is 20 to 150 µm, and a gas pressure of a working gas at the blasting step and the film forming step is 2 to 5 MPa.

### Advantageous Effects of Invention

According to the present invention, by spraying powder of non-metal onto a substrate having a high hardness by a cold spraying method and blasting a surface of the substrate, a film is easily anchored to the substrate, and an oxide film is removed from the surface of the substrate. Therefore, metal bonding occurs between the substrate and the film, and it is possible to manufacture a laminate having excellent adhesion between the substrate and the film.

### Brief Description of Drawings

FIG. 1 is a cross-sectional view illustrating a structure of a laminate according to an embodiment of the present invention.
FIG. 2 is a schematic diagram illustrating an outline of a cold spraying device used for forming a metal film of the laminate according to the embodiment of the present invention.
FIG. 3 is a schematic diagram for explaining formation of the metal film of the laminate according to the embodiment of the present invention.
FIG. 4 is a schematic diagram for explaining formation of a metal film of a laminate according to a modified example of the embodiment of the present invention.
FIG. 5 is a schematic diagram illustrating an outline of another cold spraying device used for forming the metal film of the laminate according to the embodiment of the present invention.
FIG. 6 is an SEM image of a cross section of a laminate of Example 1.
FIG. 7 is an SEM image of a cross section of a laminate of Comparative Example 1.
FIG. 8 is an SEM image of a cross section of a laminate of Example 5.
FIG. 9 is an SEM image of a cross section of a laminate of Comparative Example 9.

### Description of Embodiments

Hereinafter, an embodiment of the present invention will be described in detail with reference to the drawings. Note that the present invention is not limited by the following embodiment. In addition, in the drawings referred to in the following description, a shape, a size, and a positional relationship are only schematically illustrated such that the contents of the present invention can be understood. That is, the present invention is not limited only to the shape, the size, and the positional relationship illustrated in the drawings.

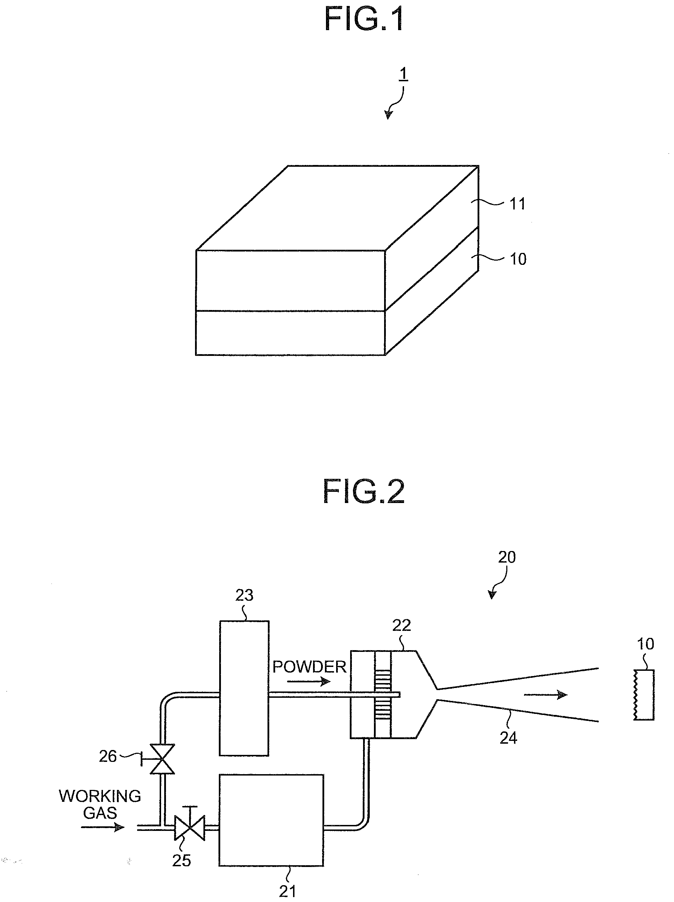

FIG. 1 is a cross-sectional view illustrating a structure of a laminate according to the embodiment of the present invention. A laminate 1 illustrated in FIG. 1 includes a substrate 10 made of a metal or an alloy having a Vickers hardness of 120 HV or more and a film 11 formed on a surface of the substrate 10, laminated by a cold spraying method described later, and made of a metal or an alloy. The shape of the laminate 1 is not limited to a rectangular flat plate shape as illustrated in FIG. 1, but may be a cylindrical shape, a polygonal prism shape, or the like.

A material of the substrate 10 is not limited as long as being made of a metal or an alloy having a Vickers hardness of 120 HV or more. Examples of the material include a rolled steel material such as SS400, a carbon steel such as S45C, a chromium steel material such as SCr435, a manganese steel such as SMn443, a manganese chromium steel such as SMnC, a chromium molybdenum steel such as SCM882, a nickel chromium molybdenum steel such as SNC815, a stainless steel such as SUS304, titanium or a titanium alloy, a nickel-based superalloy such as Inconel 600, cast iron, and an aluminum alloy such as extra super duralumin (7000 series). Incidentally, even when the film 11 is formed on the substrate 10 made of a metal or an alloy having a Vickers hardness of less than 120 HV by a cold spraying method, by performing a non-metallic blasting step by the cold spraying method, an oxide film is removed, metal bonding is easily formed, and irregularities are formed on a surface of the substrate 10. Adhesion between the substrate 10 and the film 11 can be improved by an anchor effect caused by enter of the film 11 into the irregularities.

A material of the metal or the alloy constituting the film 11 is not limited. The metal or alloy powder as the material of the film 11 used in the present embodiment has an average particle diameter of 20 µm to 150 µm. When the average particle diameter is 20 µm to 150 µm, the powder has good fluidity and is easily available.

Next, a method for manufacturing the laminate 1 according to the present embodiment will be described. For the laminate 1, the film 11 is formed by performing a blasting step of accelerating powder of non-metal together with a gas heated to a temperature lower than the melting point of the non-metal and spraying the powder of non-metal onto a surface of the substrate 10 in a solid phase state to blast the surface of the substrate 10, then accelerating a metal or alloy powder together with a gas heated to a temperature lower than the melting point of the metal or the alloy, spraying the powder onto the surface of the substrate 10 blasted in the blasting step in a solid phase state, and depositing the powder.

The powder of non-metal used in the blasting step has an average particle diameter (D50) of 15 to 500 µm. When the average particle diameter (D50) of the powder of non-metal is smaller than 15 µm, a blasting effect of the substrate 10 is small. Meanwhile, when the average particle diameter (D50) of the powder of non-metal is larger than 500 µm, a gas nozzle of a cold spraying device described later is likely to be clogged. The average particle diameter (D50) of the powder of non-metal is preferably 100 to 200 µm. In addition, in order to reduce the amount of a non-metal remaining on a surface of the substrate 10 in the blasting step, the powder of non-metal is preferably spherical.

The powder of non-metal used in the present embodiment preferably has a predetermined hardness from a viewpoint of blasting a surface of the substrate 10, forming irregularities, and exposing a newly formed surface. For example, the hardness of the powder of non-metal is preferably 500 Hv or more.

A similar effect can be obtained even by using a metal or alloy powder having a predetermined hardness in place of the powder of non-metal from a viewpoint of forming irregularities on the substrate 10 and exposing a newly formed surface. However, when the metal or alloy powder is used as a blasting material, there is a high possibility that the substrate 10 and the blasting material will cause metal bonding depending on cold spraying conditions. Therefore, the powder of non-metal is used.

The powder of non-metal used in the present embodiment is ceramics, diamond or glass. Examples thereof include glass such as soda lime glass or quartz glass, ceramics such as zircon, alumina, zirconia, or aluminum nitride, and diamond.

The blasting step with the powder of non-metal on a surface of the substrate 10 is performed by a cold spraying method. The blasting step will be described with reference to FIG. 2. FIG. 2 is a schematic diagram illustrating an outline of a cold spraying device 20 used in the blasting step of the laminate 1 according to the present embodiment.

The cold spraying device 20 includes a gas heater 21 for heating a working gas, a powder supply device 23 for housing material powder of non-metal to be injected onto the substrate 10 and supplying the material powder of non-metal to a spray gun 22, and a gas nozzle 24 for injecting the non-metal powder material mixed with the heated working gas onto the substrate 10 with the spray gun 22.

Examples of the working gas include helium, nitrogen, and air. The supplied working gas is supplied to the gas heater 21 and the powder supply device 23 by valves 25 and 26, respectively. The working gas supplied to the gas heater 21 is heated to a temperature of, for example, 100°C or higher and equal to or lower than the melting point of the non-metallic material, and then supplied to the spray gun 22.

The working gas supplied to the powder supply device 23 supplies the material powder of non-metal in the powder supply device 23 to the spray gun 22 so as to have a predetermined discharge amount. The heated working gas is formed into a supersonic flow (about 340 m/s or more) by the gas nozzle 24 having a tapering divergent shape. In addition, the gas pressure of the working gas is 2 MPa to 5 MPa. By setting the pressure of the working gas to about 2 MPa to 5 MPa, a surface of the substrate 10 can be blasted to form irregularities. The material powder of non-metal supplied to the spray gun 22 is accelerated by introduction of the working gas into the supersonic flow, and collides with the substrate 10 at a high speed in a solid phase state to blast a surface of the substrate 10. As a method for blasting a metal or the like, a method such as air blasting or shot blasting can be considered. However, in order to surely form irregularities on a surface of the substrate 10 made of a metal or the like having a high hardness in a short time, a blasting treatment is preferably performed by a cold spraying method.

The surface of the substrate 10 is blasted with the powder of non-metal as described above. Thereafter, the film 11 is formed using the cold spraying device 20 having a similar configuration to that used in the blasting step. The film 11 is formed by accelerating a metal or alloy powder as a material together with a gas heated to a temperature lower than the melting point of the metal or the alloy, spraying the powder onto the blasted surface of the substrate 10 in a solid phase state, and depositing the powder.

Examples of the working gas include helium, nitrogen, and air used in the blasting step. The working gas is heated to a temperature of, for example, 100°C or higher and equal to or lower than the melting point of a metal or an alloy as powder material to form the film 11, and then supplied to the spray gun 22.

The working gas supplied to the powder supply device 23 supplies powder material in the powder supply device 23 to the spray gun 22 so as to have a predetermined discharge amount. The heated working gas is formed into a supersonic flow (about 340 m/s or more) by the gas nozzle 24 having a tapering divergent shape. In addition, the gas pressure of the working gas is 2 MPa to 5 MPa. By setting the pressure of the working gas to about 2 MPa to 5 MPa, adhesion strength between the substrate 10 and the film 11 can be improved. The powder material supplied to the spray gun 22 is accelerated by introduction of the working gas into the supersonic flow, and collides with the substrate 10 at a high speed in a solid phase state to form the film 11. Only by spraying the material powder of the film 11 by the cold spraying device 20, it is impossible to form irregularities on a surface of the substrate 10 having a high hardness and to expose a newly formed surface. However, in the present embodiment, the surface of the substrate 10 is blasted in the blasting step to form irregularities, and a newly formed surface is exposed. Therefore, metal bonding easily occurs, and the laminate 1 having high adhesion can be obtained due to an anchor effect.

Incidentally, in order to promote metal bonding between newly formed surfaces, a film is preferably formed promptly after the blasting step. After the blasting step, by performing a film forming step, for example, within 3 hours, preferably within 1 hour, the laminate 1 having high adhesion can be obtained.

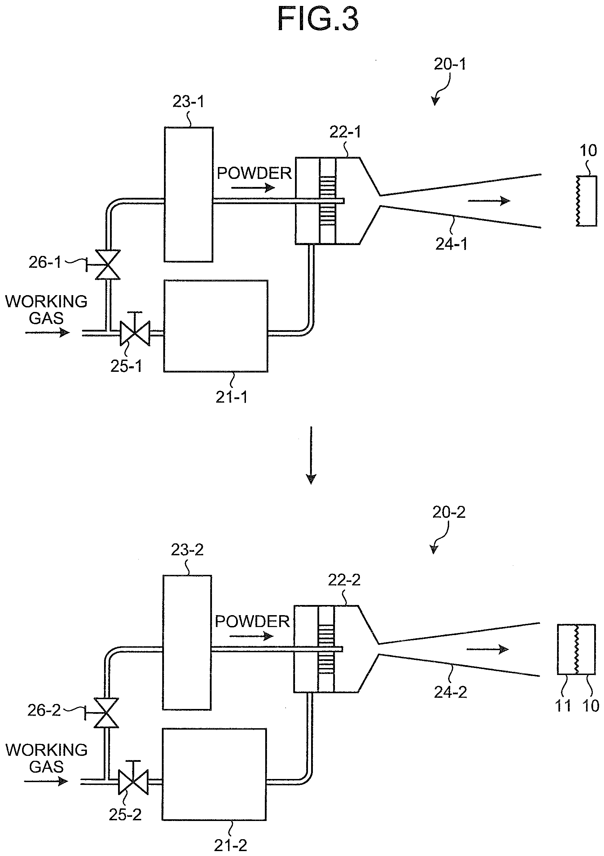

When a film is formed using the two cold spraying devices 20, as illustrated in FIG. 3, in a cold spraying device 20-1, preferably, material powder of non-metal housed in a powder supply device 23-1 is supplied to a spray gun 22-1, formed into a supersonic flow in a gas nozzle 24-1 by a working gas supplied from a gas heater 21-1, and sprayed onto a surface of the substrate 10 to perform blasting. Thereafter, in a cold spraying device 20-2, preferably, powder material housed in a powder supply device 23-2 is supplied to a spray gun 22-2, formed into a supersonic flow in a gas nozzle 24-2 by a working gas supplied from a gas heater 21-2, and sprayed onto the blasted surface of the substrate 10 to form the film 11.

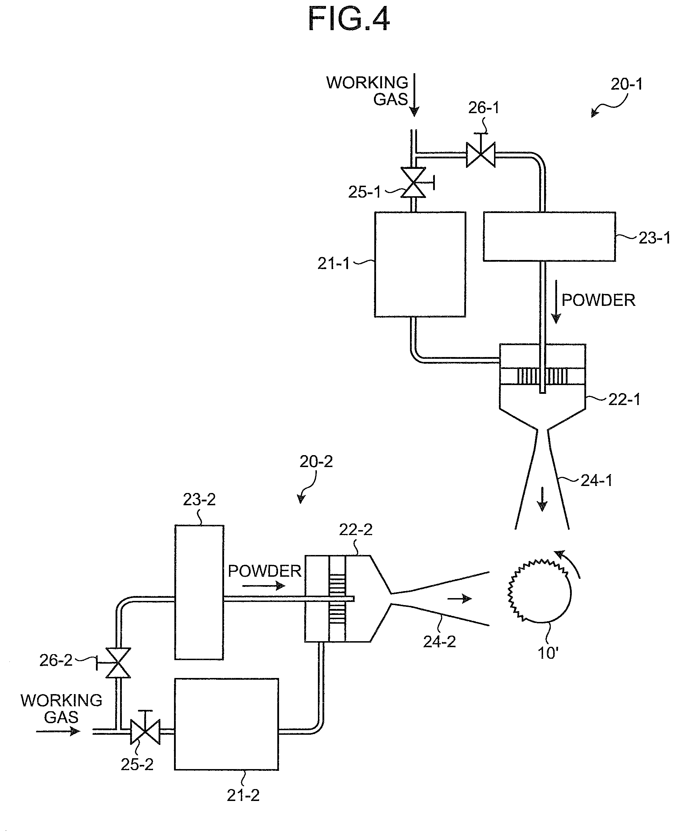

In addition, when the film 11 is formed on a side surface of a cylindrical substrate 10', as illustrated in FIG. 4, in the cold spraying device 20-1, material powder of non-metal housed in the powder supply device 23-1 may be supplied to the spray gun 22-1, formed into a supersonic flow in the gas nozzle 24-1 by a working gas supplied from the gas heater 21-1, and sprayed onto the side surface of the rotating substrate 10' to perform blasting. Thereafter, in the cold spraying device 20-2, powder material housed in the powder supply device 23-2 may be supplied to the spray gun 22-2, formed into a supersonic flow in the gas nozzle 24-2 by a working gas supplied from the gas heater 21-2, and sprayed onto the side surface (blasted surface) of the rotating substrate 10' to form the film 11.

In addition, in the above manufacturing method, the blasting step and the film forming step are performed using the two cold spraying devices 20. However, manufacturing is also possible, for example, using a cold spraying device having two powder supply lines.

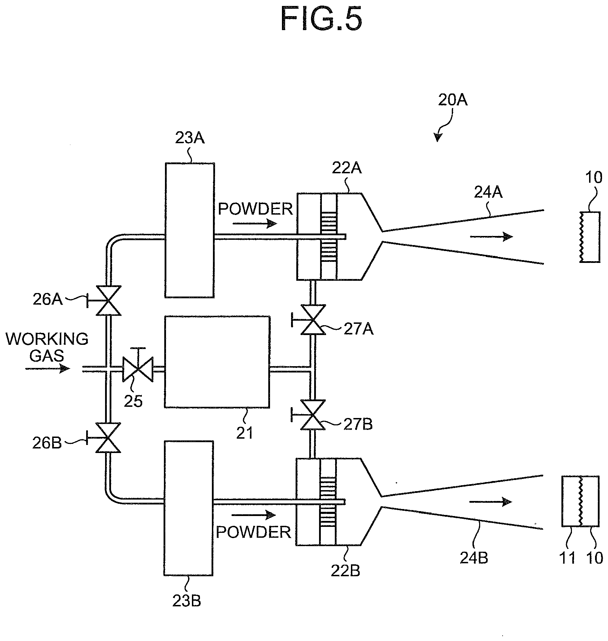

FIG. 5 is a schematic diagram illustrating an outline of a cold spraying device 20A used for forming a metal film of the laminate according to the embodiment of the present invention. The cold spraying device 20A has two powder supply lines each including the powder supply device 23, the spray gun 22, and the gas nozzle 24. Powder of non-metal is housed in a powder supply device 23A, and the material powder of non-metal is supplied to a spray gun 22A so as to have a predetermined discharge amount by a working gas supplied through a valve 26A. In addition, a heated working gas is supplied from the gas heater 21 to the spray gun 22A through a valve 27A, and is formed into a supersonic flow in a gas nozzle 24A. A metal or alloy powder as a material of a film is housed in a powder supply device 23B, and the metal or alloy powder material is supplied to a spray gun 22B so as to have a predetermined discharge amount by a working gas supplied through a valve 26B. A heated working gas is supplied from the gas heater 21 to the spray gun 22B through a valve 27B, and is formed into a supersonic flow in a gas nozzle 24B. During a blasting step, the valves 26A and 27A are opened, and the valves 26B and 27B are closed. During a film forming step, it is only required that the valves 26A and 27A are closed and the valves 26B and 27B are opened.

According to the above-described embodiment, a surface of the substrate 10 made of a metal or an alloy having a high hardness and difficulty in obtaining a film with excellent adhesion is blasted with powder of non-metal to form irregularities, and a newly generated surface can be exposed. Therefore, metal bonding occurs between the film and the substrate, and the film enters the irregularities on the surface of the substrate to cause anchoring. Therefore, a laminate having excellent adhesion can be obtained.

### Examples

### (Example 1)

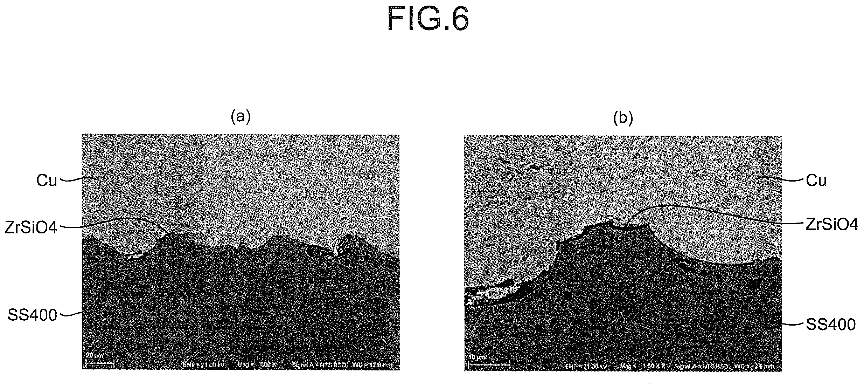

A working gas: nitrogen, working gas temperature: 650°C, working gas pressure: 5 MPa, working distance (WD): 25 mm, traverse speed: 200 mm/s per pass and a zircon powder (ZrSiO₄, particle diameter less than 63 µm) were sprayed onto the substrate 10 (SS400, Vickers hardness 120 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a copper (Cu) powder (D50 = 40 µm) were sprayed onto the blasted surface of the substrate 10 with the cold spraying device 20 to form the film 11, thus manufacturing the laminate 1. From the manufactured laminate 1, a rectangular parallelepiped test piece of 50 mm × 50 mm and a height of 16 (full height) mm (6 mm in the height direction was the height of the film 11) was cut out, and adhesion strength at an interface between the substrate 10 and the film 11 was measured by a shear test device (a shear force was measured by applying a load to the film 11 from an upper side to a lower side with the substrate 10 part of the laminate 1 gripped in a vertical direction). Results are indicated in Table 1. In addition, FIG. 6 illustrates an SEM image of a cross section of the laminate 1 manufactured in Example 1. FIG. 6(a) is an SEM image at magnification of 500 times, and FIG. 6(b) is an SEM image at magnification of 1500 times.

### (Comparative Example 1)

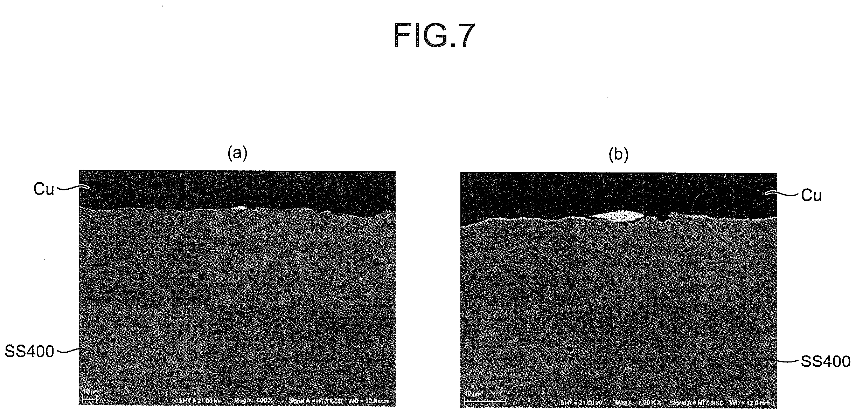

A copper powder (D50 = 40 µm) was sprayed onto the substrate 10 (SS400, Vickers hardness 120 HV) with the cold spraying device 20 in a similar manner to Example 1 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1. In addition, FIG. 7 illustrates an SEM image of a cross section of the laminate 1 manufactured in Comparative Example 1. FIG. 7(a) is an SEM image at magnification of 500 times, and FIG. 7(b) is an SEM image at magnification of 1500 times.

### (Comparative Example 2)

A soda lime glass powder (particle diameter 53 to 63 µm) was sprayed onto the substrate 10 (SS400, Vickers hardness 120 HV) with a suction type atmospheric blasting device at a gas pressure of 0.4 MPa, a working distance (WD) of 25 mm, and a traverse speed of 200 mm/s per pass to blast a surface of the substrate 10. A working gas: nitrogen, working gas temperature: 650°C, working gas pressure: 5 MPa, working distance (WD): 25 mm, traverse speed: 200 mm/s and a copper powder (D50 = 40 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 3)

A copper powder (D50 = 40 µm) was sprayed onto the milled substrate 10 (SS400, Vickers hardness 120 HV) with the cold spraying device 20 in a similar manner to Example 1 to form the film 11, thus manufacturing the laminate 1. For the manufactured laminate 1, adhesion strength between the substrate 10 and the film 11 was measured in a similar manner to Example 1. Results are indicated in Table 1.

### (Comparative Examples 4 to 6)

A working gas: nitrogen, working gas temperature: 650°C, working gas pressure: 5 MPa, working distance (WD): 25 mm, traverse speed: 200 mm/s and a mixed powder of a copper powder (D50 = 40 µm) and a zircon powder (ZrSiO₄, particle diameter less than 63 µm) (Comparative Example 4, Cu : ZrSiO₄ = 7 : 3 (volume), Comparative Example 5, Cu : ZrSiO₄ = 5 : 5 (volume), Comparative Example 6, Cu : ZrSiO₄ = 2 : 8 (volume)) were sprayed onto the substrate 10 (SS400, Vickers hardness 120 HV) with the cold spraying device 20 without performing the blasting step, and the film 11 was formed to manufacture the laminate 1. For the manufactured laminate 1, adhesion strength between the substrate 10 and the film 11 was measured in a similar manner to Example 1. Results are indicated in Table 1.

### (Comparative Example 7)

A working gas: nitrogen, working gas temperature: 200°C, working gas pressure: 0.5 MPa, working distance (WD): 25 mm, traverse speed: 200 mm/s per pass a copper powder (D50 = 40 µm) were sprayed onto the substrate 10 (SS400, Vickers hardness 120 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a copper powder (D50 = 40 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Example 2)

A working gas: nitrogen, working gas temperature: 650°C, working gas pressure: 5 MPa, working distance (WD): 25 mm, traverse speed: 200 mm/s per pass and a zircon powder (ZrSiO₄, particle diameter less than 63 µm) were sprayed onto the substrate 10 (SUS304, Vickers hardness 150 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a copper powder (D50 = 40 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Example 3)

A copper powder (D50 = 40 µm) was sprayed onto the substrate 10 (SUS304, Vickers hardness 150 HV) with the cold spraying device 20 in a similar manner to Example 2 except that the blasting material was changed to alumina powder (Al₂O₃, particle diameter 73.5 to 87.5 µm) to form the film 11, thus manufacturing the laminate 1. For the manufactured laminate 1, adhesion strength between the substrate 10 and the film 11 was measured in a similar manner to Example 1. Results are indicated in Table 1.

### (Example 4)

A copper powder (D50 = 40 µm) was sprayed onto the substrate 10 (SUS304, Vickers hardness 150 HV) with the cold spraying device 20 in a similar manner to Example 2 except that the blasting material was changed to a soda lime glass powder (particle diameter 53 to 63 µm) to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 8)

A copper powder (D50 = 40 µm) was sprayed onto the substrate 10 (SUS304, Vickers hardness 150 HV) with the cold spraying device 20 in a similar manner to Example 2 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1.

### (Example 5)

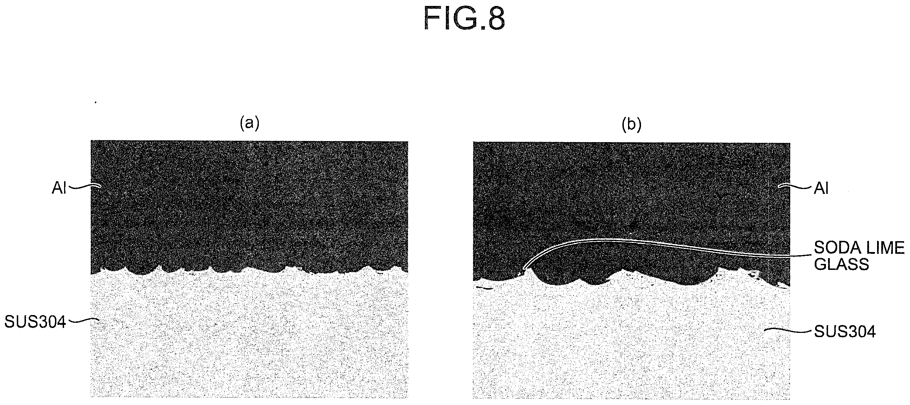

A working gas: nitrogen, working gas temperature: 250°C, working gas pressure: 3 MPa, working distance (WD): 25 mm, traverse speed: 200 mm/s per pass and a soda lime glass powder (particle diameter 53 to 63 µm) were sprayed onto the substrate 10 (SUS304, Vickers hardness 150 HV) with the cold spraying device 20 to blast a surface of the substrate 10. A working gas: nitrogen, working gas temperature: 250°C, working gas pressure: 3 MPa, working distance (WD): 25 mm, traverse speed: 200 mm/s and an aluminum (Al) powder (D50 = 30 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1. Incidentally, in measuring adhesion strength of Example 5, the film 11 was not peeled off at an interface with the substrate 10, and the film 11 was broken. In addition, FIG. 8 illustrates an SEM image of a cross section of the laminate 1 manufactured in Example 5. FIG. 8(a) is an SEM image at magnification of 200 times, and FIG. 8(b) is an SEM image at magnification of 500 times.

### (Comparative Example 9)

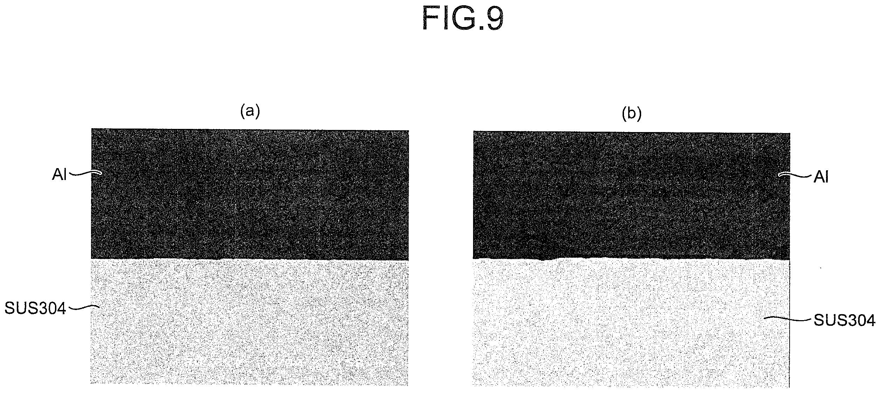

An aluminum powder (D50 = 30 µm) was sprayed onto the substrate 10 (SUS304, Vickers hardness 150 HV) with the cold spraying device 20 in a similar manner to Example 5 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1. In addition, FIG. 9 illustrates an SEM image of a cross section of the laminate 1 manufactured in Comparative Example 9. FIG. 9(a) is an SEM image at magnification of 500 times, and FIG. 9(b) is an SEM image at magnification of 1500 times.

### (Comparative Example 10)

A working gas: nitrogen, working gas temperature: 200°C, working gas pressure: 0.5 MPa, working distance (WD): 25 mm, traverse speed: 200 mm/s per pass and an aluminum powder (D50 = 30 µm) were sprayed onto the substrate 10 (SUS304, Vickers hardness 150 HV) with the cold spraying device 20 to blast a surface of the substrate 10. A working gas: nitrogen, working gas temperature: 250°C, working gas pressure: 3 MPa, working distance (WD): 25 mm, traverse speed: 200 mm/s and an aluminum powder (D50 = 30 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Example 6)

A working gas: nitrogen, working gas temperature: 650°C, working gas pressure: 5 MPa, working distance (WD): 25 mm, traverse speed: 200 mm/s per pass and a soda lime glass powder (particle diameter 53 to 63 µm) were sprayed onto the substrate 10 (SUS304, Vickers hardness 150 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a titanium (Ti) powder (D50 = 25 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 11)

A titanium powder (D50 = 25 µm) was sprayed onto the substrate 10 (SUS304, Vickers hardness 150 HV) with the cold spraying device 20 in a similar manner to Example 6 except that the blasting step was not performed to form the film 11, thus manufacturing the laminate 1. For the manufactured laminate 1, adhesion strength between the substrate 10 and the film 11 was measured with a shear test device similar to that in Example 1. Results are indicated in Table 1.

### (Example 7)

A working gas: nitrogen, working gas temperature: 650°C, working gas pressure: 5 MPa, working distance (WD): 25 mm, traverse speed: 200 mm/s per pass and a soda lime glass powder (particle diameter 53 to 63 µm) were sprayed onto the substrate 10 (SUS304, Vickers hardness 150 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a SUS316L powder (45 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 12)

A SUS316L powder (45 µm) was sprayed onto the substrate 10 (SUS304, Vickers hardness 150 HV) with the cold spraying device 20 in a similar manner to Example 7 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1.

### (Example 8)

A working gas: nitrogen, working gas temperature: 650°C, working gas pressure: 5 MPa, working distance (WD): 25 mm, traverse speed: 200 mm/s per pass and a soda lime glass powder (particle diameter 53 to 63 µm) were sprayed onto the substrate 10 (titanium, Vickers hardness 120 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a copper powder (D50 = 40 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 13)

A copper powder (D50 = 40 µm) was sprayed onto the substrate 10 (titanium, Vickers hardness 120 HV) with the cold spraying device 20 in a similar manner to Example 8 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1.

### (Example 9)

A working gas: nitrogen, working gas temperature: 650°C, working gas pressure: 5 MPa, working distance (WD): 25 mm, traverse speed: 200 mm/s per pass and a soda lime glass powder (particle diameter 53 to 63 µm) were sprayed onto the substrate 10 (Inconel 600, Vickers hardness 130 to 300 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a copper powder (D50 = 40 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 14)

A copper powder (D50 = 40 µm) was sprayed onto the substrate 10 (Inconel 600, Vickers hardness 130 to 300 HV) with the cold spraying device 20 in a similar manner to Example 9 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1.

### (Example 10)

A working gas: nitrogen, working gas temperature: 650°C, working gas pressure: 5 MPa, working distance (WD): 25 mm, traverse speed: 200 mm/s per pass and a soda lime glass powder (D50 = 53 to 63 µm) were sprayed onto the substrate 10 (copper: C1020, Vickers hardness 75 HV) with the cold spraying device 20 to blast a surface of the substrate 10. A working gas: nitrogen, working gas temperature: 650°C, working gas pressure: 5 MPa, working distance (WD): 25 mm, traverse speed: 200 mm/s and a copper powder (D50 = 40 µm) were sprayed onto the blasted surface of the substrate 10 with the cold spraying device 20 to form the film 11, thus manufacturing the laminate 1. For the manufactured laminate 1, adhesion strength between the substrate 10 and the film 11 was measured in a similar manner to Example 1. Results are indicated in Table 1.

### (Comparative Example 15)

A copper powder (D50 = 40 µm) was sprayed onto the substrate 10 (copper: C1020, Vickers hardness 75 HV) with the cold spraying device 20 in a similar manner to Example 10 except that the blasting step was not performed to form the film 11, thus manufacturing the laminate 1. For the manufactured laminate 1, adhesion strength between the substrate 10 and the film 11 was measured in a similar manner to Example 1. Results are indicated in Table 1.

**Table 1**

| Combination of film/substrate | Example Comparative Example | Material of film | Substrate | Hardness of substrate (Hv) | Surface state of substrate | Blasting condition | | | | Film forming condition | Adhesion strength [MPa] | Inclusion in film |
|---|---|---|---|---|---|---|---|---|---|---|---|---|
| | | | | | | Material | Particle diameter [µm] | Method | Condition | | | |
| Cu on SS400 | Example 1 | Cu powder | SS400 | 120 | Base | ZrSiO₄ | <63 | Cold spraying | N-650°C-5MPa | N-650°C-5MPa | 70 | None |
| | Comparative Example 1 | Cu powder | SS400 | 120 | Base | None | | | | N-650°C-5MPa | Peeled off | None |
| | Comparative Example 2 | Cu powder | SS400 | 120 | Base | Soda lime glass | 53-63 | Suction type atmospheric blasting | 0.4 MPa | N-650°C-5MPa | Peeled off | None |
| | Comparative Example 3 | Cu powder | SS400 | 120 | Milled surface | None | | | | N-650°C-5MPa | Peeled off | None |
| | Comparative Example 4 | Cu : ZrSiO4 (7 : 3) mixed powder | SS400 | 120 | Base | None | | | | N-650°C-5MPa | Peeled off | Present |
| | Comparative Example 5 | Cu : ZrSiO4 (5 : 5) mixed powder | SS400 | 120 | Base | None | | | | N-650°C-5MPa | Peeled off | Present |
| | Comparative Example 6 | Cu ZrSiO4 (2 8) mixed powder | SS400 | 120 | Base | None | | | | N-650°C-5MPa | 73 | Present |
| | Comparative Example 7 | Cu powder | SS400 | 120 | Base | Cu | Average 40 | Cold spraying | N-200°C-0.5MPa | N-650°C-5MPa | Peeled off | None |
| Cu on SUS | Example 2 | Cu powder | SUS304 | 150 | Base | ZrSiO4 | <63 | Cold spraying | N-650°C-5MPa | N-650°C-5MPa | 123 | None |
| | Example 3 | Cu powder | SUS304 | 150 | Base | Al203 | 73.5-87.5 | Cold spraying | N-650°C-5MPa | N-650°C-5MPa | 124 | None |
| | Example 4 | Cu powder | SUS304 | 150 | Base | Soda lime glass | 53-63 | Cold spraying | N-650°C-5MPa | N-650°C-5MPa | 63 | None |
| | Comparative Example 8 | Cu powder | SUS304 | 150 | Base | None | | | | N-650°C-5MPa | Peeled off | None |
| Al on SUS | Example 5 | Al powder | SUS304 | 150 | Base | Soda lime glass | 53-63 | Cold spraying | N-250°C-3MPa | N-250°C-3MPa | 44 | None |
| | Comparative Example 9 | Al powder | SUS304 | 150 | Base | None | | | | N-250°C-3MPa | Peeled off | None |
| | Comparative Example 10 | Al powder | SUS304 | 150 | Base | Al | Average 30 | Cold spraying | N-200°C-0.5MPa | N-250°C-3MPa | Peeled off | None |
| Ti on SUS | Example 6 | Ti powder | SUS304 | 150 | Base | Soda lime glass | 53-63 | Cold spraying | N-650°C-5MPa | N-650°C-5MPa | 96 | None |
| | Comparative Example 11 | Ti powder | SUS304 | 150 | Base | None | | | | N-650°C-5MPa | Peeled off | None |
| SUS on SUS | Example 7 | SUS316L powder | SUS304 | 150 | Base | Soda lime glass | 53-63 | Cold spraying | N-650°C-5MPa | N-650°C-5MPa | 179 | None |
| | Comparative Example 12 | SUS316L powder | SUS304 | 150 | Base | None | | | | N-650°C-5MPa | Peeled off | None |
| Cu on Ti | Example 8 | Cu powder | Ti | 120 | Base | Soda lime glass | 53-63 | Cold spraying | N-650°C-5MPa | N-650°C-5MPa | 94 | None |
| | Comparative Example 13 | Cu powder | Ti | 120 | Base | None | | | | N-650°C-5MPa | Peeled off | None |
| Cu on Inconel | Example 9 | Cu powder | Inconel 600 | 130-300 | Base | Soda lime glass | 53-63 | Cold spraying | N-650°C-5MPa | N-650°C-5MPa | 105 | None |
| | Comparative Example 14 | Cu powder | Inconel 600 | 130-300 | Base | None | | | | N-650°C-5MPa | Peeled off | None |
| Cu on Cu | Example 10 | Cu powder | C1020 | 75 | Base | Soda lime glass | 53-63 | Cold spraying | N-650°C-5MPa | N-650°C-5MPa | 148 | None |
| | Comparative 15 Example | Cu powder | C1020 | 75 | Base | None | | | | N-650°C-5MPa | 84 | None |

As indicated in Table 1, in Examples 1 to 9 in which a surface of the substrate 10 was blasted with the cold spraying device 20 using zircon, alumina, or soda lime glass to form the film 11, adhesion strength was improved as compared with Comparative Examples 1, 8, 9, and 11 to 14 in which the film 11 was formed without performing a blasting treatment. In Comparative Examples 1, 8, 9, and 11 to 14 in which the film 11 was formed without performing a blasting treatment, the film 11 was deposited on the substrate 10, but the film 11 was peeled off without applying a load with a shear test device. In addition, as illustrated in FIGS. 6 to 9, in Examples 1 and 5 in which the blasting treatment was performed, it can be seen that irregularities were formed on a surface of the substrate 10 as compared with Comparative Examples 1 and 9 in which the blasting treatment was not performed and that the film 11 entered the irregularities. By this anchoring, adhesion strength between the substrate 10 and the film 11 is improved.

### Reference Signs List

1 LAMINATE
10 SUBSTRATE
11 FILM
20, 20-1, 20-2, 20A COLD SPRAYING DEVICE
21, 21-1, 21-2 GAS HEATER
22, 22-1, 22-2, 22A, 22B SPRAY GUN
23, 23-1, 23-2, 23A, 23B POWDER SUPPLY DEVICE
24, 24-1, 24-2, 24A, 24B GAS NOZZLE
25, 25-1, 25-2, 26, 26-1, 26-2, 26A, 26B, 27A, 27B VALVE

## Claims

1. A method for manufacturing a laminate (1) including a substrate (10) made of a metal or an alloy having a Vickers hardness of 120 HV or more, and a film (11) formed on a surface of the substrate (10) and made of a metal or an alloy, the method comprising:
a blasting step of blasting the surface of the substrate (10) by accelerating powder of non-metal together with a gas heated to a temperature lower than a melting point of the non-metal and spraying the powder of non-metal onto the surface of the substrate (10) in a solid phase state; and
a film forming step of forming the film (11) by accelerating a metal or alloy powder together with a gas heated to a temperature lower than the melting point of the metal or the alloy, spraying the powder in a solid phase state onto the surface of the substrate (10) blasted in the blasting step, and depositing the powder onto the surface of the substrate (10),
wherein the non-metal is ceramics, diamond, or glass,
an average particle diameter (D50) of the powder of the non-metal is 15 to 500 µm,
an average particle diameter of the metal or alloy powder is 20 to 150 µm, and
a gas pressure of a working gas at the blasting step and the film forming step is 2 to 5 MPa.

2. The method for manufacturing a laminate according to claim 1, wherein the film forming step is performed within three hours after the blasting step.

## Patentansprüche

1. Verfahren zur Herstellung eines Laminats (1) mit einem Substrat (10), das aus einem Metall oder einer Legierung mit einer Vickershärte von 120 HV oder mehr gefertigt ist, und einer Folie (11), die auf einer Oberfläche des Substrats (10) gebildet ist und aus einem Metall oder einer Legierung gefertigt ist, wobei das Verfahren umfasst:
einen Strahlschritt, bei dem die Oberfläche des Substrats (10) bestrahlt wird, indem ein Nichtmetallpulver zusammen mit einem Gas, das auf eine Temperatur unterhalb des Schmelzpunkts des Nichtmetalls erwärmt wurde, beschleunigt wird, und das Nichtmetallpulver auf die Oberfläche des Substrats (10) in einem Festphasenzustand gesprüht wird; und
einen Folienbildungsschritt, bei dem die Folie (11) gebildet wird, indem ein Metall- oder Legierungspulver zusammen mit einem Gas, das auf eine Temperatur unterhalb des Schmelzpunkts des Metalls oder der Legierung erwärmt wurde, beschleunigt wird, das Pulver in einem Festphasenzustand auf die in dem Strahlschritt bestrahlte Oberfläche des Substrats (10) gesprüht wird, und das Pulver auf der Oberfläche des Substrats (10) abgeschieden wird,
wobei das Nichtmetall eine Keramik, ein Diamant oder ein Glas ist,
ein mittlerer Teilchendurchmesser (D50) des Nichtmetallpulvers 15 bis 500 µm beträgt,
ein mittlerer Teilchendurchmesser des Metall- oder Legierungspulvers 20 bis 150 µm beträgt, und
der Gasdruck eines Arbeitsgases bei dem Strahlschritt und dem Folienbildungsschritt 2 bis 5 MPa beträgt.

2. Verfahren zur Herstellung eines Laminats gemäß Anspruch 1, wobei der Folienbildungsschritt innerhalb von drei Stunden nach dem Strahlschritt durchgeführt wird.

## Revendications

1. Procédé de fabrication d'un stratifié (1) incluant un substrat (10) fait d'un métal ou d'un alliage présentant une dureté Vickers de 120 HV ou plus, et un film (11) formé sur une surface du substrat (10) et fait d'un métal ou d'un alliage, le procédé comprenant :
une étape de décapage consistant à décaper la surface du substrat (10) en accélérant une poudre de non-métal conjointement avec un gaz chauffé à une température inférieure à un point de fusion du non-métal et en pulvérisant la poudre de non-métal sur la surface du substrat (10) dans un état de phase solide ; et
une étape de formation de film consistant à former le film (11) en accélérant une poudre de métal ou d'alliage conjointement avec un gaz chauffé à une température inférieure au point de fusion du métal ou de l'alliage, en pulvérisant la poudre dans un état de phase solide sur la surface du substrat (10) décapé dans l'étape de décapage, et en déposant la poudre sur la surface du substrat (10),
dans lequel le non-métal est une céramique, un diamant, ou un verre,
un diamètre particulaire moyen (D50) de la poudre du non-métal est de 15 à 500 µm,
un diamètre particulaire moyen de la poudre de métal ou d'alliage est de 20 à 150 µm, et
une pression de gaz d'un gaz de travail dans l'étape de décapage et l'étape de formation de film est de 2 à 5 MPa.

2. Procédé de fabrication d'un stratifié selon la revendication 1, dans lequel l'étape de formation de film est effectuée dans les trois heures après l'étape de décapage.
